# EUROPEAN PATENT APPLICATION

(11) **EP 3 968 256 A1**
(43) Date of publication of application: **16.03.2022**
(21) Application number: 21195608.1
(22) Date of filing: 08.09.2021
(51) Int. Cl.: G06Q 30/02, G06Q 30/06

(54) **SCHEDULING DISPLAYS ON A TERMINAL DEVICE**

(30) Priority: 10.09.2020 GB 202014237
(71) Applicant: Advanced Commerce Ltd, London N1 7GU (GB)
(72) Inventor: BROWN, André, London, N1 7GU (GB)
(74) Representative: Ruuskanen, Juha-Pekka

(57) **Abstract**

Apparatuses and methods of controlling scheduling of displays presented in response to data indicative of user inputs from user terminals in a computerised system are disclosed. A performance metric is determined for a response by a data processing apparatus configured to respond to user terminals, the response being provided in accordance with a strategy of scheduling displays when responding to data indicative of at least one user input. A response performance score is computed based on the determined performance metric and a reference metric representative of a preferred result when responding data indicative of user inputs. It can then be determined, based on the response performance score, whether the strategy of scheduling displays when responding data indicative of user inputs needs a change.

## Description

The present disclosure relates to methods, apparatuses and computer program products for scheduling displays presented on a terminal device in a communication system, and more particularly to controlling scheduling of displays presented to users visiting a remote data processing apparatus.

Users of terminal devices can connect to remote data processing apparatuses and make search queries on or browse the data available through the remote apparatus. The remote data processing apparatus can respond to various actions by such visiting users by sending data to the terminal device. The terminal device can then present one or more displays on a graphical user interface, or display screen thereof.

An example of such operation is a computerised remote sales system. These are commonly known as electronic commerce or e-commerce / eCommerce systems. The sales mechanism typically involves a website, or an eCommerce site run on server apparatus enabling product searching and purchasing by users visiting the site. Users can connect to the server apparatus via a data communication network using their user terminals. The user terminals can access the data network to connect the server apparatus via fixed or wireless connections. In typical applications eCommerce enables firms and individuals to buy and sell things over the internet / World Wide Web.

Electronic commerce in general can be seen to cover technologies such as online shopping or retailing, mobile commerce, electronic funds transfer, supply chain management, Internet marketing, online transaction processing, electronic data interchange (EDI), inventory management systems, and automated data collection systems. An aspect of electronic commerce is merchandising. Merchandising can be broadly understood as the sales procedure involving an eCommerce site run on server apparatus enabling product searching and purchasing by users visiting the site. Merchandising on an eCommerce site can involve prioritization of product sequencing displayed on the site. That is, the order in which products are displayed to the visiting user can be controlled, e.g., when responding to a search query by a visiting user or when the visiting user is browsing the site. Control on the product sequencing is important because factors such as high visitor bounce rates and typical consumer behaviour can mean that retailers may only rely visitors viewing the first few pages of the site rather than viewing the entire listing of products or viewing more than a fraction of it whilst the rest gest no attention. Careful scheduling of products that are displayed first can thus become critical for the success of the site.

Data of users visiting one or more eCommerce sites, their behaviour and other related aspects can be collected in a database, analysed and used for automatically ordering the display of products on the eCommerce site according to a merchandising strategy. The collected and stored data can be used according a predetermined strategy to optimise the product sequencing for a visiting user. Operation according to the strategy is provided by a data processor configured to follow an algorithm implementing predefines rules to achieve the desired goal. Use of a good merchandising strategy is believed to lead to higher conversion rates, higher average order values and lower returns of products.

US 9,773,270 discloses an example for a method and systems for recommending products based on ranking cocktail. Other examples are disclosed in GB application publication 2527915 and PCT publication WO00/60509.

Despite the existing strategies have solved certain problems, the inventor has found ways to improve certain aspects of merchandising strategies on electronic remote sales system.

According to an aspect, there is provided a method of controlling scheduling of displays presented in response to data indicative of user inputs from user terminals in a computerised system, the method comprising:
determining a performance metric for a response by a data processing apparatus configured to respond to user terminals in accordance with a strategy of scheduling displays when responding to data indicative of at least one user input;
computing a response performance score based on the determined performance metric and a reference metric representative of a preferred result when responding data indicative of user inputs; and
determining, based on the response performance score, whether the strategy of scheduling displays when responding data indicative of user inputs needs a change.

According to another aspect, there is provided an apparatus for controlling scheduling of displays presented in response to data indicative of user inputs received from user terminals in a computerised system, the apparatus comprising at least one processor and at least one memory including a computer program code, the at least one memory and computer program code configured to, with the at least one processor, cause the apparatus at least to:
determine a performance metric for a response in accordance with a strategy of scheduling displays when responding to data indicative of at least one user input;
compute a response performance score based on the determined performance metric and a reference metric representative of a preferred result when responding to data indicative of at least one user input; and
determine, based on the response performance score, whether the strategy of scheduling displays when responding to data indicative of at least one user input needs a change.

In accordance with a more specific aspect computing of a response performance score comprises computing a ratio of the performance metric to the reference metric.

A response performance score can be compared to at least one threshold. A change in the strategy of scheduling displays can be triggered based on the comparison. The trigger can be provided in response to detection that the response performance score is less and/or exceeds the at least one threshold.

A strategy of scheduling displays may be replaced with a different strategy of scheduling displays based on a response performance score indicating a need for a change. At least one parameter used by an algorithm for performing a strategy of scheduling displays can be changed based on the response performance score indicating a need for a change. The change may comprise adding at least one parameter and/or removing at least one parameter and/or changing the value of at least one parameter used by the algorithm.

Testing at least one new strategy of scheduling displays before activation thereof may be provided. It may also be tested how a change in at least one parameter used by an algorithm for performing a strategy of scheduling displays effects the operation.

The data indicative of at least one user input may comprise a search query and/or web browsing data.

In accordance with an aspect data indicative of at least one user input is received where after the response performance score is calculated before responding. The response performance score can be determined to indicate low performance. In response thereto the strategy of scheduling of displays is changed before responding.

A notification of the determined response performance score may be provided.

The data processing apparatus can be configured to provide a website making products available for the users of user terminals.

A response performance score can be determined only for a part of products and/or services available on a website and/or for selected queries about the products and/or services.

A computer software product embodying at least a part of the herein described functions may also be provided. In accordance with an aspect a computer program comprises instructions for performing the methods described herein.

Some aspects will now be described in further detail, by way of example only, with reference to the following examples and accompanying drawings, in which:
Figure 1 illustrates a schematic example of a remote sales system where the invention can be practised;
Figure 2 is an example of a control apparatus;
Figures 3 and 4 show examples of differently scheduled displays on a screen of a user device; and
Figures 5 and 6 show flowcharts for operation according to certain examples.

The following description gives an exemplifying description of some possibilities to practise the invention. Although the specification may refer to "an", "one", or "some" examples or embodiment(s) in several locations of the text, this does not necessarily mean that each reference is made to the same example of embodiment(s), or that a particular feature only applies to a single example or embodiment. Single features of different examples and embodiments may also be combined to provide other embodiments.

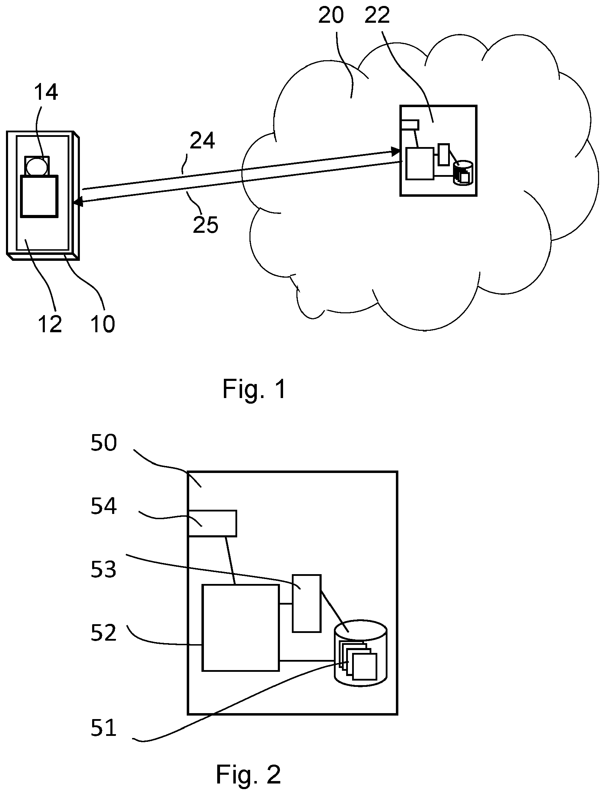

Figure 1 shows a data communication system 20 enabling user terminal devices 10 to remotely access a data processing apparatus 22 according to the herein described examples. For simplicity, only one user terminal device 10 is shown - it shall be understood that a great number of different types of user devices may connect to the server apparatus. The user terminal devices may be any suitable devices capable of data communications with and display of responses from the data processing apparatus 22. The user device may be adapted for fixed line or wireless communications and may be provided by any device capable of sending and receiving data from the remote data processing apparatus 22 by means of any appropriate standards and protocols. The user device 10 is shown to comprise a display screen 12. A display 14 is presented on the screen 12.

Non-limiting examples of appropriate user devices comprise a mobile station (MS) or user equipment (UE) (e.g., a mobile device such as a mobile phone or what is known as a 'smart phone'), a desktop, laptop or tablet type computer device provided with fixed line or a wireless interface card or other wireless interface facility (e.g., USB dongle), personal data assistant (PDA), or any combinations of these or the like. The data communications device may be provided as part of another device.

The data communication system 20 can be based on the Internet Protocol (IP) but it shall be understood that various underlying data communication architectures, technologies, standards, and protocols can be involved in data communications between the server apparatus 22 and remote user devices. The data communications can comprise a search query 24 by the user device 10, and a response 25 to the search query by the data processing apparatus 25. The user device can also send in message 24 data indicative of other actions such as browsing, requests for specific data items, upload of data and so on can also provide a trigger for the response 25 from the server apparatus.

The data processing apparatus 22 can comprise a server apparatus configured to implement at least some of the herein described features. To provide this the data processing apparatus comprises at least one processor, at least one memory and other internal circuitry and components necessary to perform the tasks. Figure 2 shows an example of a data processing apparatus 50 comprising processor(s) 52, 53 and memory or memories 51. Figure 2 further shows connections between the elements of the apparatus and an interface 54 for connecting the data processing apparatus to the data communications system 22 and enabling data communications with the device 10. The at least one memory may comprise at least one ROM and/or at least one RAM. The apparatus may comprise other possible components for use in software and hardware aided execution of tasks it is designed to perform, including providing an electronic commerce website, control of access by visiting user devices, communications with the visiting user devices and devices, and implementing the herein described features of scheduling what is displayed to the visiting user devices in response to search queries by the devices. The at least one processor can be coupled to the at least one memory. The at least one processor may be configured to execute an appropriate software code to implement one or more of the following aspects. The software code may be stored in the at least one memory, for example in the at least one RAM.

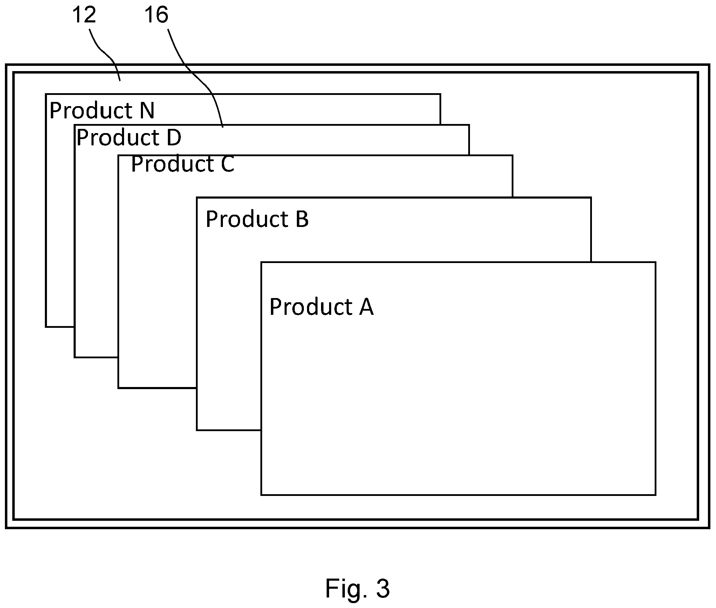

Figure 3 is a schematic presentation of a display screen 12 and a plurality of displays 16 presented therein in accordance with a first scheduling strategy. The first scheduling strategy can be performed by the data processor apparatus that is configured to follow an algorithm implementing predefines rules and using predefined parameters. Each display relates to a product. The product displays are presented in an order based on the first scheduling strategy such that Product A is shown first, followed by Product B, Product C, Product D and so on until Product N. In this example the visiting user would thus see first product A, and if not happy with that then Product B, then Product C, then Product D and so on.

However, there are occasions where a different ordering of the displays to meet differing consumer preferences can provide advantage such as a better performance of the site, time saving for the visiting user, less data communication and more efficient use of data processing resources by not needing to open displays the visiting user is not interested at. In addition, better inventory management, lesser returns, avoiding unnecessary handling of products and so on can also be achieved. This can be particularly beneficial in highly automated delivery systems.

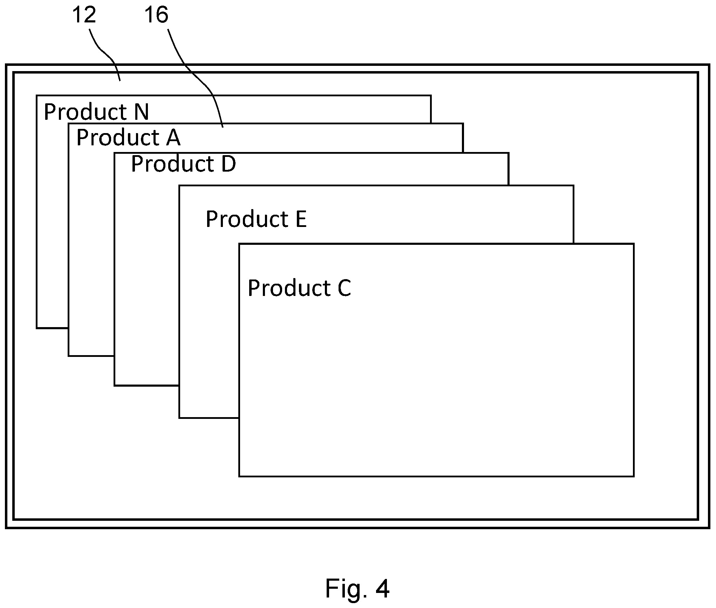

Figure 4 shows an example of a display screen 12 where the product displays 16 are scheduled based on a different scheduling strategy. The strategy may be switched to a different, or second scheduling strategy. The first strategy may also be tuned by changing one or more parameters within the first strategy so that the order of presentation of the displays is changed. To provide the change in strategy the data processing apparatus 22 is configured to change its behavior when responding to user inputs at the terminal device 10. The change can be dynamic to improve efficiency in serving the user and the overall delivery operation.

In this example the displays are presented in an order where the first display the user sees is Product C, followed by Product E, Product D, Product A, and so on. As can be seen, the strategy now proposes Product C as the first choice. The strategy has also "lifted" Product E in the second place whereas Product A is presented less prominently than it would if operated according to the first strategy.

The different scheduling of displays may be advantageous in various applications where users can search, view and compare different products. The products can be any products, and shall be understood broadly covering, in addition of physical goods also services, software products, downloads and so on. Also, the products can be searched and delivered in various contexts. In addition to retail and other commercial applications, the products can be searched and ordered, e.g., within a non-commercial organisation. A non-limiting example of such application would be a healthcare complex such as an hospital with a centralised goods and services supply system. It shall thus be appreciated that displays can be presented and the scheduling thereof controlled for the purposes of many other applications than the eCommerce presented herein as an example.

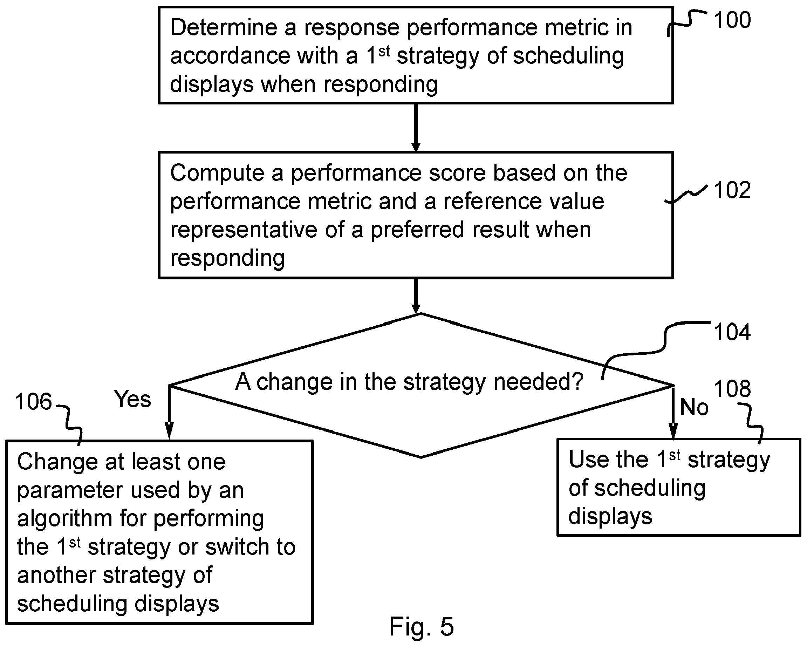

Figure 5 shows an example of operation according to one scenario of controlling scheduling of displays in response to signals indicative of user input actions, in this example search queries, from user terminals in a computerised system. The method comprises determining at 100 a performance metric for a search query response in accordance with a strategy of scheduling displays in responding search queries by a data processing apparatus configured to respond search queries from user terminals. A search performance score is then computed at 102 based on the determined performance metric and a reference metric representative of a preferred result when responding a search query. It can then be determined at 104, based on the search performance score, whether the strategy of scheduling displays in responding search queries by the data processing apparatus needs a change.

If the answer is yes, the strategy can be replaced at 106 with a different strategy in response to the search performance score indicating a need for a change. A possibility is to change at least one parameter used by an algorithm for performing the strategy in response to the search performance score indicating a need for a change. This may include, e.g., adding and/or removing and/or changing the value of at least one parameter.

If the check indicates that the strategy performs on an acceptable performance level then no change is necessary. The old and tested strategy can thus be used for responding search queries at 108.

In addition to, or instead of, responding search queries the same principles can be applied when responding to other data indicative of input actions by a visiting user. For example, data indicative of one or more inputs by a user browsing the site can be communicated from the user device to the remote server apparatus. A plurality of displays can then be scheduled according to a strategy of scheduling the displays, the strategy being dependent on the performance score.

The computing of the performance score may comprise computing a ratio of the performance metric value to the reference value. The proportionality of the measured value to the desired score enables easy adjustment of the system to different views of a "perfect" or "good enough" performance and different aims.

The determined performance score may be compared to a threshold. A change can be triggered in the strategy of scheduling displays in responding data from the user device by detection that the performance score is less than the threshold. The system can also have a threshold for lowest acceptable performance, i.e., no change is triggered as long as the performance score is above the lower threshold. An acceptable performance windows can be defined between higher and lower thresholds. Thresholds may also be defined for different types of changes needed. For example, a series of thresholds may be defined indicative the severity of underperformance and the action(s) and/or changes in strategy needed to address these.

The method can comprise testing at least one potential new strategy of scheduling displays before the strategy is activated and used when responding real life search queries and other data from the user terminals. The effect of a change in at least one parameter used by an algorithm for performing the strategy of scheduling displays in responding search queries may also be tested before activation of the algorithm.

The following describes in more detail examples for mechanisms for evaluating and comparing different strategies for an eCommerce application. The strategies of these examples are referred to as merchandising strategies. The effectiveness of different merchandising strategies can be evaluated. Also, predictions about how a new merchandising strategy may perform can be provided. The mechanism can also be configured to allow retailers to define their own measures of success, which can then be evaluated.

In a detailed example a merchandising score parameter is used in selection of an appropriate merchandising strategy and implementation thereof. Parameters and an algorithm run on a server apparatus 22 based on a mathematical formula can be provided for choosing one merchandising strategy over another in pursuit of set merchandising objectives. The score can also be used by the retailers as a planning tool as basis for making predictions about and testing how a new potential merchandising strategy might perform. Strategy may be dynamically switched during operation of an eCommerce system.

The merchandising score parameter can be expressed as a percentage score of how effective any given merchandising strategy is, compared to a value of a reference score. The reference score may present an optimal or ideal case, and can be, for example, a value that is determined to be the very best score in ideal circumstances, i.e., a "perfect score". The reference score can also have a value that is considered to provide a good / best achievable performance in all thinkable scenarios, without being the ideal best.

The reference score value and other parameters can be defined, e.g., by the system provider and/or the retailer. Each party having the right to administer the system, for example a retailer, may set their own criteria how to set the reference score, and any other parameter used by the algorithm run on the data processing apparatus. For example, each retailer may wish to create their own perfect score using metrics of their own choosing, reflecting their views and expertise. The setter of the parameter values can use any of the key metrics in the system for the numerator and/or the denominator elements of the merchandising score calculation.

It is also possible to determine a time frame for collecting the data used on the calculating the score. For example, a short rolling time window, a long rolling time window or an absolute historic score may be defined.

A blend of metrics can be used to provide a value for the reference score. For example, metrics for quantifying high price, high margin, high stock availability, low returns and/or low cancelled orders may be used.

In a basic implementation a merchandising score parameter can simply be computed by the server apparatus by summing the known click-through rates ("CTR") of all the products on the first n category/search pages and divide the sum by the CTR of the top n performing products on the site to produce a value for the merchandising score.

However, such a simple solution may not produce accurate enough information for all scenarios. For example, a retailer may want an ideal world situation where the customers buy products providing the combination of highest price, highest margin and good stock availability together with the lowest return rates and lowest cancelled orders. To achieve this a more sophisticated implementation can be provided that allows the retailer to specify a selection of metrics that they want to be included within the merchandising score and/or how the metrics are used, e.g., weighted in the application. Examples of possible metrics include average order value, conversion rate, trending, sell through rate, visits to purchase, bounce rates, returns, cancelled orders and in-store purchases. Other metrics are also possible.

In accordance with an example a merchandising score is determined for a part of products available on a site rather than over the entire selection available through the site. For example, a merchandising score can be determined and output for any search term, group of search terms or category page to see the effectiveness of the merchandising strategy being used for the relevant part.

A percentage score can be determined for a retailer for each different merchandising strategy and web page/search combination. For example, a determined score of 63% can be considered as indication that the given merchandising strategy and web page/search combination is performing at 63% of the very best it could be.

A low value can be used as an indication or prompt that there is room for improvement. For example, a retailer can, after being noted of a low score, improve the merchandising score parameter by adjusting the merchandising strategy, e.g., by adding and/or adjusting some additional metrics to the strategy to change the sequencing of displays. For example, one or more metrics such as conversion rates or average order values can be added and/or adjusted.

Switch to another strategy can also be suggested as an output. A suggestion of alternative merchandising strategies that are likely to have a better merchandising score may be provided even during runtime operation. The suggestions may be given automatically in real time or substantially in real time. For example, a suggestion can be displayed in response to a trigger generated in response to background monitoring testing the performance of the currently used strategy and metrics in responding search queries.

The triggering can be provided in response to at least one threshold. If the determined score is below a threshold this provides an indication that the strategy is not performing satisfactorily, and a change is needed. For example, the above mentioned score of 63% for the given merchandising strategy and web page/search combination would trigger an action if the acceptability threshold is set at 70%. The trigger can result automatic corrective action to be taken and/or a notification to the administrator of the system. For example, switch to another strategy and/or change in parameters may be automatically triggered or suggested to the administrator.

Similarly, a lowest acceptable threshold can be set. For example, if the lowest acceptable threshold is set at 55%, the system can be allowed to run as it is because the score of 63% is above the lowest acceptable level.

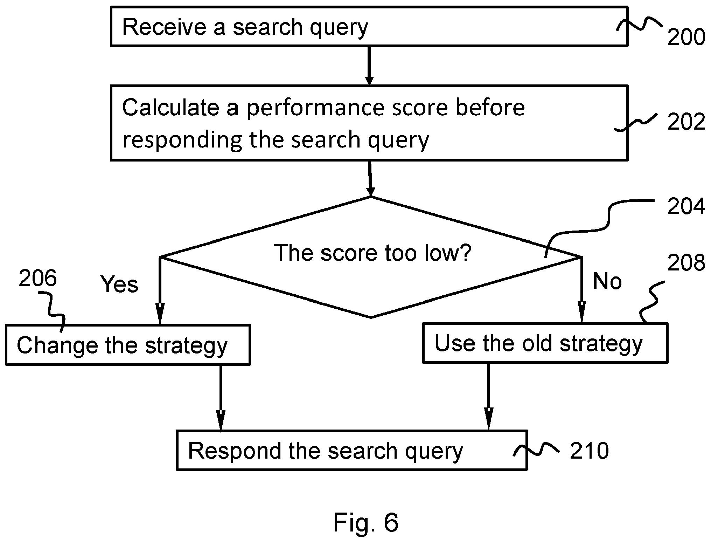

In accordance with an example shown in Figure 6, when a browsing user does a search the results of the search are reviewed at 202 by a processor apparatus upon receipt of data from a user device of the browsing user at 200 before sending a response to the browsing user. A merchandising score is recalculated at this stage. If the score is determined to be too low at 204, the search can be automatically enhanced at 206 so that the products that are shown in a search results page have a higher merchandising score. The auto-enhancement can be provided, e.g., by the system changing the search merchandising strategy to a trending search strategy or high converting search strategy without operator intervention.

Instead of search query the received data can indicate any other user input where after a response performance score can be calculated before responding. If the response performance score indicates low performance the strategy of scheduling of displays can be changed before generating the response.

Old strategy can be used at 208 if the check at 204 satisfies a preset criteria for the performance score. The response can then be generated and send accordingly.

A user visiting the site may make a relatively simple search, e.g., for a dress. The search can be performed accordingly but at the same time an automatic determination for related search terms that have a higher merchandising score can be provided, and such terms or products suggested or displayed for the user. For example, summer dresses or party dresses etc. may be suggested.

A regression-test of any proposed new merchandising strategy against previous search terms or category pages may be provided.

The merchandising score may be shown in a preview screen. This enables quick assessment of the effectiveness of using different merchandising strategies, or the effect of using two or more merchandising strategies in combination.

In accordance with an example all different strategies are auto-run in the background against the score achieved by the top performing products on the site. Based on the auto-run notifications can be provided to inform which strategies are the most effective.

In accordance with a further embodiment, when a new user accesses the site, the displays are first scheduled according to a strategy that starts from products directly responding the search query and thus resulting display of a product or a few products the new user is most likely to buy, rather than what the retailer would rather want him/her to purchase. For example, this may be desired in order to convert the new user into a regular customer. The strategy can then be changed once it is determined that the user is a once or many-times returning customer, and the merchandising score shows that a better performance could be achieved by changing the strategy. For example, the retailer may be prepared to take more risk and schedule the algorithm to push what the retailer really wants to sell.

Other additional aspects can be introduced into computing the merchandising score. For example, a parameter descriptive of the current shopping journey on a site for a user versus previous users may be included. It can be determined if a customer spends n minutes (e.g., 30 minutes) browsing for a product or if the user is out shortly after starting (e.g., within 2 minutes) either making a purchase or not. The long browsing time may indicate a captive audience (e.g., for the first 20 minutes) but then a new strategy for the scheduling may be needed to nudge the user to a desired direction and product.

It is noted that although the above detailed examples have been described with reference to merchandising score and eCommerce applications similar principles can be applied to scenarios where displays may need scheduling. There are several variations and modifications which may be made to the disclosed solution without departing from the scope of the present invention. In particular, the different embodiments have been described as examples. Different features from different embodiments may be combined. The embodiments may thus vary within the scope of the attached claims.

In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor or by hardware, or by a combination of software and hardware. Further in this regard it should be noted that any of the above procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

While certain aspects of the invention may be illustrated and described as block diagrams, flow charts, or using some other schematic pictorial representation, it is well understood that these blocks, apparatus, systems, techniques and methods described herein may be implemented at least in part in, as non-limiting examples, hardware, software, firmware, special purpose circuits or logic, general purpose hardware or controller or other computing devices, or some combination thereof.

The foregoing description provides by way of exemplary and non-limiting examples a full and informative description of exemplary embodiments of the invention. However, various modifications and adaptations may become apparent to those skilled in the relevant arts in view of the foregoing description, when read in conjunction with the accompanying drawings and the appended claims. All such and similar modifications of the teachings of this invention will still fall within the scope of this invention as defined by the claims.

## Claims

1. A method of controlling scheduling of displays (14) presented in response to data indicative of user inputs from user terminals (10) in a computerised system, the method comprising:
determining (100) a performance metric for a response (25) by a data processing apparatus (20) configured to respond to user terminals (10) in accordance with a strategy of scheduling displays when responding to data (24) indicative of at least one user input;
computing (102) a response performance score based on the determined performance metric and a reference metric representative of a preferred result when responding data indicative of user inputs; and
determining (104), based on the response performance score, whether the strategy of scheduling displays when responding data indicative of user inputs needs a change.

2. A method in accordance with claim 1, wherein the computing of the response performance score comprises computing a ratio of the performance metric to the reference metric.

3. A method in accordance with claim 1 or 2, comprising comparing the response performance score to at least one threshold, and triggering a change in the strategy of scheduling displays in response to detection that the response performance score is less and/or exceeds the at least one threshold.

4. A method in accordance with any preceding claim, comprising at least one of:
replacing the strategy of scheduling displays with a different strategy of scheduling displays based on the response performance score indicating a need for a change,
changing at least one parameter used by an algorithm for performing the strategy of scheduling displays based on the response performance score indicating a need for a change,
adding at least one parameter and/or removing at least one parameter and/or changing value of at least one parameter used by the algorithm,
testing at least one new strategy of scheduling displays before activation thereof,
testing the effect of a change in at least one parameter used by an algorithm for performing the strategy of scheduling displays, and
generating a notification of the determined response performance score.

5. A method in accordance with any preceding claim, wherein the data (24) indicative of at least one user input comprises a search query and/or web browsing data.

6. A method in accordance with any preceding claim, comprising
receiving data (24) indicative of at least one user input,
calculating the response performance score after receiving the data and before responding,
determining that the response performance score indicates low performance, and
in response to the determining of low performance changing the strategy of scheduling of displays before generating the response (25).

7. A method in accordance with any preceding claim, wherein the data processing apparatus (22) provides a website making products and/or services available for the users of the user terminals (10).

8. A method in accordance with claim 7, comprising determining the response performance score for a part of the products and/or services available on website and/or for selected queries about the products and/or services.

9. An apparatus (20) for controlling scheduling of displays (14) presented in response to data (24) indicative of user inputs received from user terminals (10) in a computerised system (20), the apparatus comprising at least one processor and at least one memory including a computer program code, the at least one memory and computer program code configured to, with the at least one processor, cause the apparatus at least to:
determine a performance metric for a response (25) in accordance with a strategy of scheduling displays when responding to data (24) indicative of at least one user input;
compute a response performance score based on the determined performance metric and a reference metric representative of a preferred result when responding to data indicative of at least one user input; and
determine, based on the response performance score, whether the strategy of scheduling displays when responding to data indicative of at least one user input needs a change.

10. An apparatus in accordance with claim 9, configured to at least one of:
compute the response performance score as a ratio of the performance metric to the reference metric,
compare the response performance score to at least one threshold, and trigger a change in the strategy of scheduling displays in response to detection that the response performance score is less and/or exceeds the at least one threshold,
replace the strategy of scheduling displays with a different strategy of scheduling displays when the response performance score indicates a need for a change,
change at least one parameter used by an algorithm for performing the strategy of scheduling displays when the response performance score indicates a need for a change,
add at least one parameter and/or remove at least one parameter and/or change the value of at least one parameter used by the algorithm, and
test at least one new strategy of scheduling displays before it is activated, and/or test effect of a change in at least one parameter used by an algorithm for performing the strategy of scheduling displays.

11. An apparatus in accordance with claim 9 or 10, wherein the data (24) indicative of at least one user input comprises a search query and/or web browsing data.

12. An apparatus in accordance with any of claims 9 to 11, configured to:
receive data (24) indicative of at least one user input,
calculate the response performance score after receiving the data and before responding,
determine that the response performance score indicates low performance, and
in response to the determined low performance change the strategy of scheduling of displays before generating the response (25).

13. An apparatus in accordance with any of claims 9 to 12, wherein the data processing apparatus (22) is configured to provide a website making products and/or services available for the users of the user terminals (10).

14. An apparatus according to claim 13, configured to determine the response performance score for a part of the products and/or services available on website and/or for selected queries about the products and/or services.

15. A computer software product comprising a set of computer readable instruction that, when executed on a processor apparatus (50), cause performance of the method of any of claims 1 to 8.
